# FASCICULE DE BREVET EUROPEEN

(11) **EP 0 621 521 B1**
(45) Date de publication et mention de la délivrance du brevet: **01.04.1998**
(21) Numéro de dépôt: 94400859.8
(22) Date de dépôt: 20.04.1994
(51) Int. Cl.: G05B 23/02, G05B 19/048

(54) **Système de sécurité à microprocesseur, applicable notamment au domaine des transports ferroviaires**
Mikroprozessor-Sicherheitssystem, insbesondere verwendbar auf dem Gebiet des Bahntransportes
Microprocessor safety system, in particular applicable to the field of railways transportation

(30) Priorité: 21.04.1993 FR 9304680
(43) Date de publication de la demande: 26.10.1994
(73) Titulaire: CSEE-TRANSPORT, F-75817 Paris Cédex 17 (FR)
(72) Inventeur: Gruere, Yves, F-78350 Jouy en Josas (FR); Demichel, Laurent, F-91100 Corbell (FR); Le Gall, Hervé, F-78470 Saint Remy les Chevreuses (FR)
(74) Mandataire: Chameroy, Claude

(56) Documents cités:
- EP-A- 0 322 141
- EP-A- 0 346 804
- EP-A- 0 496 509
- WO-A-89/10865
- DE-A- 3 225 455
- DE-A- 3 923 773
- US-A- 4 998 194
- IEEE MICRO, vol.4, no.6, Décembre 1984, New York, US, pp 22-33; W. MCGILL ET AL.: 'FAULT TOLERANCE IN CONTINUOUS PROCESS CONTROL'
- IEEE TRANSACTIONS ON INDUSTRY APPLICATIONS, vol.25, no.3, Mai 1989, New York, US, pp 514-522; V. MAGGIOLI: 'THE SAFETY MATRIX - A METHOD FOR GUIDELINING INDUSTRIAL MICROCOMPUTERS'

## Description

La présente invention concerne un système de sécurité à microprocesseur, applicable notamment au domaine des transports ferroviaires, pour contrôler et commander des actionneurs en fonction des données fournies par des capteurs comprenant au moins deux microprocesseurs en parallèle traitant la même application, dont les entrées reçoivent les données des capteurs, et un troisième microprocesseur de comparaison dénommé voteur, pour comparer les résultats des deux microprocesseurs d'application et commander en conséquence un contrôleur dynamique autorisant l'émission des données de sorties vers les actionneurs.Un système de ce genre est décrit par exemple dans EP-A-O 496 509, dans son application particulière au contrôle de freinage d'un véhicule automobile. Toutefois dans le système décrit par ce document, les résultats des deux microprocesseurs en parallèle ne sont pas comparés en sécurité par le troisième microprocesseur qui n'est en fait constitué que par un simple arbitre.

Un autre système à microprocesseur est décrit par DE-A-3 923 773, dans son application particulière à la régulation d'un chauffe-eau. Le système décrit par ce document ne comporte en fait que deux microprocesseurs en parallèle et deux relais commandés chacun par les deux microprocesseurs, ces deux relais constituant un voteur très sommaire.

De tels systèmes ne peuvent donc pas être considérés comme réellement de sécurité et sont inutilisables en sécurité ferroviaire.

Dans tous les systèmes à sécurité orientée, et en particulier dans les transports ferroviaires, la sécurité, jusqu'à une période récente, était réalisée à partir de composants et de circuits satisfaisant aux règles de la sécurité intrinsèque.

La sécurité intrinsèque repose sur les lois de la physique, par exemple la gravité, et sur un modèle de panne exhaustif. Toute panne doit mettre le système dans un état "restrictif", c'est-à-dire qui restreint ses fonctionnalités opérationnelles. Dans les systèmes ferroviaires, l'état restrictif consiste généralement à provoquer l'arrêt du train.

Depuis l'apparition des microprocesseurs, ces derniers sont intervenus dans la réalisation de ces fonctions de sécurité. La conception de ces systèmes programmés de sécurité se fonde sur deux principes, à savoir la redondance informationnelle par codage de l'information, consistant à ajouter aux données fonctionnelles, des parties de contrôle qui permettent la détection des erreurs et des mauvais fonctionnements du système à sécuriser, et la redondance matérielle, consistant à utiliser plusieurs calculateurs en parallèle, et à effectuer la comparaison des résultats au moyen de composants matériels ou logiciels.

Dans la technique du codage de l'information, on n'utilise qu'un seul microprocesseur, mais ce dernier travaille sur des informations redondées comportant une partie fonctionnelle et une partie codée. Ceci permet d'avoir un algorithme doublé sur deux informations différentes. La signature résultante de l'algorithme est envoyée vers un contrôleur externe réalisé en sécurité intrinsèque, appelé contrôleur dynamique. Si le résultat appartient au code, il est validé par ce contrôleur qui autorise les sorties de sécurité à se propager vers l'extérieur, c'est-à-dire vers les actionneurs. Dans le cas contraire, ces sorties sont invalidées et mises dans leur état restrictif. Il est à noter que, la plupart du temps, les sorties de sécurité sont effectuées de manière fonctionnelle puis relues et comparées en sécurité avec les valeurs de commande.

Suivant la puissance du codage utilisé, cette technique dite du processeur codé permet une probabilité de non détection d'erreur plus ou moins importante, mais les inconvénients résident dans une importante augmentation du temps de calcul et une lourdeur de la programmation. En revanche, la sécurité du système n'impose pas de précaution technologique particulière, ce qui permet d'utiliser n'importe quel microprocesseur industriel du commerce.

Dans la technique de la redondance matérielle, la sécurité est assurée par la mise en parallèle d'au moins deux microprocesseurs. La comparaison et l'autorisation sont effectuées de manière externe, soit par comparaison mutuelle, soit par du matériel réalisé avec des techniques de sécurité intrinsèques. Le logiciel applicatif est implanté sur les deux microprocesseurs, soit de manière identique, soit en introduisant volontairement des dissymétries.

Pour assurer un bon niveau de sécurité avec une telle technique, dite du biprocesseur, il faut se prémunir contre les défaillances de mode commun, ce qui impose l'indépendance totale des deux chaînes de traitement avec notamment des bus séparés et le doublement de tous les matériels. Il faut également se prémunir contre les pannes latentes, ce qui induit quasi obligatoirement l'adjonction de procédures d'autotest et/ou de tests croisés.

La synchronisation des microprocesseurs peut se révéler délicate, et la sécurité repose sur la connaissance des comportements de ces microprocesseurs. Par contre, il n'y a pas de surcharge de calcul, puisque les informations ne sont pas codées.

Toutefois, lorsque le comparateur est réalisé en sécurité intrinsèque, la quantité de matériel de sécurité, spécifique de l'application, peut conduire à des coûts prohibitifs.

La présente invention a donc pour but principal de remédier aux inconvénients des deux techniques antérieures, tout en conservant les avantages de chacune de ces techniques.

A cet effet, la présente invention a pour objet un système de sécurité à microprocesseurs qui se caractérise essentiellement en ce que les entrées et les sorties des deux microprocesseurs d'application sont codées selon la technique du processeur codé, le voteur effectue, par logiciel et en sécurité,, la comparaison des résultats caractéristiques codés des deux microprocesseurs d'application en utilisant la technique du processeur codé, et les données de sortie sont relues en sécurité pour être comparées aux données d'entrée, et un un troisième microprocesseur de comparaison dénommé voteur, pour comparer par logiciel et en sécurité les résultats caractéristiques codés des deux microprocesseurs d'application et commander en conséquence un contrôleur dynamique autorisant l'émission des données de sortie vers les actionneurs.

Grâce à cette configuration, dans laquelle seules les données d'entrées et de sortie sont codées, l'application elle-même n'a pas besoin d'être codée du fait du double traitement, de sorte que le temps de calcul reste dans des limites raisonnables. De plus, la quantité de matériel de sécurité nécessaire est réduite, ce qui permet d'abaisser le coût total du système. Enfin et ainsi qu'on le verra plus clairement par la suite, un tel système est facile à mettre en oeuvre et présente en outre une grande souplesse d'utilisation.

De préférence, un décalage temporel est introduit entre les deux microprocesseurs d'application, ce qui permet de s'affranchir des défaillances en mode commun inhérentes par exemple aux perturbations électromagnétiques.

De préférence également, le système de sécurité selon l'invention comporte un bus unique banalisé par lequel transitent les informations entre les différents microprocesseurs.

Ceci est rendu possible par le fait que la sécurité des informations qui transitent est assurée par codage et datation.

D'autres caractéristiques et avantages de la présente invention ressortiront de la description qui va suivre, faite en regard des dessins annexés dans lesquels :
- la figure 1 est un schéma synoptique illustrant le fonctionnement d'un système de sécurité conforme à l'invention ; et
- la figure 2 est un schéma synoptique de l'architecture physique de ce système de sécurité.

D'une manière générale, tous les systèmes de sécurité, appelés également systèmes de contrôle-commande, fonctionnent à partir de capteurs et d'actionneurs. Ils acquièrent des entrées analogiques, convertissent ces entrées en données numériques, traitent ces données au moyen d'algorithmes et génèrent des sorties numériques qui sont converties en sorties analogiques permettant de commander des actionneurs.

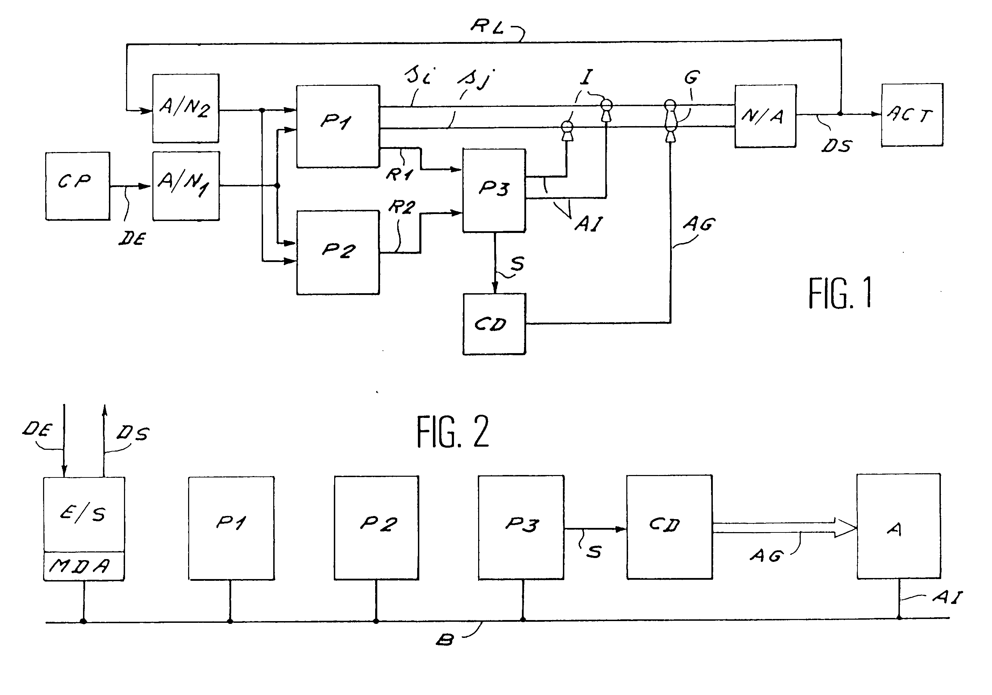

Sur le schéma de la figure 1 on trouve donc tout d'abord un ou plusieurs capteurs d'entrée tels que CP fournissant les données d'entrée DE au système. Ces données d'entrée DE de type analogique sont ensuite mémorisées et codées dans un convertisseur analogique/numérique A/N₁, avant d'être appliquées aux entrées de deux processeurs d'application P1 et P2 disposés en parallèle et traitant la même application. L'application elle-même n'a pas besoin d'être codée du fait du double traitement. Par contre, les données d'entrée et de sortie sont codées suivant la technique du processeur codé. Dans chaque processeur, les données sont donc décodées, puis traitées. De plus, chaque processeur exécute l'application avec un certain décalage temporel, ceci afin de s'affranchir contre les défaillances en mode commun telles que celles provoquées par exemple par les perturbations électromagnétiques.

Les résultats R1 et R2 des traitements de chaque processeur P1 et P2 sont enfin codés par lesdits processeurs avant d'être transmis à un troisième processeur de comparaison P3, également dénommé voteur.

Le voteur P3 effectue, par logiciel et en sécurité, la comparaison des résultats R1 et R2 en utilisant la technique du processeur codé. Ses entrées ayant été codées par les deux processeurs P1 et P2, l'algorithme du voteur consiste à comparer la valeur des résultats R1 et R2. Si cette comparaison est correcte, le voteur émet une signature S, caractéristique de son bon fonctionnement, vers un contrôleur dynamique CD réalisé en sécurité intrinsèque. Ce contrôleur dynamique CD autorise alors l'émission générale des sorties fonctionnelles telles que sᵢ et sⱼ des processeurs d'application, comme illustré en G, par l'intermédiaire d'une liaison AG. On notera ici qu'en fait seules les sorties fonctionnelles de l'un des processeurs P1 ou P2 sont effectivement utilisées. Par ailleurs, en cas de différences sur quelques résultats seulement, seules les sorties correspondantes sont inhibées par le voteur, comme illustré en I, par l'intermédiaire de liaisons AI.

Les données numériques des sorties fonctionnelles sᵢ et sⱼ sont alors converties en données de sortie analogiques dans un convertisseur numérique/analogique N/A afin de pouvoir commander des actionneurs tels que ACT. Par ailleurs, ces données de sortie DS, après conversion dans un second convertisseur analogique/numérique A/N₂, sont relues et comparées avec les données numériques initialement calculées, comme illustré par la liaison RL, ce qui réalise le contrôle en sécurité.

On va maintenant décrire de manière plus détaillée le fonctionnement et les avantages de la présente invention, en se référant notamment à la figure 2 qui représente de manière schématique l'architecture physique d'un système de sécurité conforme à l'invention.

Sur cette figure, on retrouve tout d'abord les trois processeurs P1, P2 et P3 qui sont reliés à un bus commun B, banalisé et standardisé, par lequel transitent toutes les informations entre les différents modules composant le système de sécurité. En effet, ce bus n'a aucune contrainte de sécurité particulière, puisque la sécurité des informations qui y transitent est assurée par codage et datation.

On trouve ensuite un coupleur d'entrées/sorties E/S par lequel transitent les données d'entrée DE et les données de sortie DS. Il est en effet indispensable que les entrées soient acquises par une seule entité, afin de s'assurer que les processeurs d'application P1 et P2 effectuent leur traitement sur les mêmes entrées. Ces entrées sont acquises sous forme codée, selon la technique du processeur codé, et mises à disposition des processeurs d'application P1 et P2 dans une mémoire double accès MDA reliée au bus B. Pendant toute la phase de transmission (coupleur, bus, liaison série) les données de sécurité sont protégées par codage.

Lorsque les données ont été acquises, les deux processeurs d'application P1 et P2 sont activés avec un certain décalage temporel. Chaque processeur va lire dans la mémoire double accès MDA les entrées acquises et les valide une à une. Une fois validées, ces entrées sont utilisées sous leur forme non codée pour le traitement. A la fin de l'exécution de l'application chaque processeur calcule ses sorties et prépare ses résultats qui sont codés selon la technique du processeur codé.

Les sorties physiques sont effectuées par un seul des deux processeurs P1 ou P2, par l'intermédiaire du coupleur d'entrées/sorties E/S, tandis que les résultats R1 et R2 des traitements de chaque processeur sont mis à disposition du voteur, constitué par le troisième processeur P3, dans la mémoire double accès MDA sous forme codée et datée. De plus, chacun des processeurs P1 et P2 exécute ses propres autotests dont les résultats sont intégrés dans les résultats R1 et R2 fournis au voteur P3.

La sécurité de l'architecture biprocesseur réside principalement dans l'absence de mode commun entre P1 et P2. Du fait que la comparaison s'effectue sur les sorties, les concepteurs disposent d'une grande flexibilité dans la réalisation des modules P1 et P2. Cela peut aller de deux logiciels identiques sur deux cartes identiques jusqu'à deux logiciels différents sur deux matériels différents.

Le voteur P3 acquiert les résultats R1 de P1 et R2 de P2 et les compare deux à deux en utilisant les opérations adéquates sur les données codées selon la technique du processseur codé. La réalisation de la fonction comparaison par logiciel, permet d'effectuer des contrôles de cohérence sur les sorties et/ou des filtrages sur chaque sortie. Les concepteurs ont donc une grande flexibilité dans la réalisation du voteur et peuvent réaliser l'inhibition partielle des sorties, ce qui permet des reconfigurations sur ces sorties quand elles sont doublées. De plus, le voteur contrôle en sécurité le bon fonctionnement de la structure biprocesseur, c'est-à-dire le décalage temporel et les résultats des autotests.

Le logiciel de comparaison du voteur P3 est implanté sur une carte électronique processeur qui peut être identique aux cartes de la structure biprocesseur, et la sécurité de la fonction de comparaison est effectuée en utilisant la technique du codage de l'information. La validation de la fonction est réalisée par l'émission de la signature S, calculée par le voteur et caractéristique de son bon fonctionnement, vers le contrôleur dynamique CD. De plus, cette signature est dynamisée par une information dite de rafraîchissement qui évolue dans le temps. Le contrôleur dynamique CD, réalisé en sécurité intrinsèque, va donc valider, d'une part le bon rafraîchissement de la signature, et d'autre part la signature elle-même, ce qui permet de garantir le bon fonctionnement du voteur.

Le contrôleur dynamique CD autorise alors l'émission générale des sorties par l'intermédiaire d'un module A relié au bus B, ce module A autorisant l'émission individuelle des sorties en fonction des informations fournies par le voteur. Autrement dit, en cas de désaccord partiel sur les résultats R1 et R2, seules les sorties différentes sont inhibées ou mises à l'état restrictif. En cas de mauvais fonctionnement du voteur, toutes les sorties de l'application sont bien entendu mises dans leur état restrictif. Si nécessaire, afin d'améliorer la disponibilité, le voteur peut lui-même être redondé.

On voit donc en définitive que le système de sécurité conforme à l'invention présente une très grande souplesse d'utilisation et permet de satisfaire aux exigences de sécurité voulues avec un coût et un temps de calcul raisonnables.

On notera en particulier qu'une telle architecture permet d'étendre facilement l'invention à une structure plus complexe comportant plus de deux processeurs d'application. Le logiciel du voteur peut alors, sans matériel supplémentaire, assurer une logique majoritaire de n processeurs parmi p. Autrement dit, n processeurs au moins parmi les p processeurs doivent avoir les mêmes résultats pour que les sorties de sécurité soient validées. Il va de soi par ailleurs que dans ce cas le logiciel du voteur peut être implanté sur l'un quelconque des processeurs d'application.

## Revendications

1. Système de sécurité à microprocesseur, applicable notamment au domaine des transports ferroviaires, pour contrôler et commander des actionneurs (ACT) en fonction des données fournies par des capteurs (CP), comprenant au moins deux microprocesseurs (P1, P2) en parallèle traitant la même application, dont les entrées reçoivent les données (DE) des capteurs (CP), et un troisième microprocesseur de comparaison (P3) dénommé voteur, pour comparer les résultats (R1, R2) des deux microprocesseurs d'application (P1, P2) et commander en conséquence un contrôleur dynamique (CD) autorisant l'émission des données de sortie (DS) vers les actionneurs (ACT), caractérisé en ce que les entrées et les sorties des deux microprocesseurs d'application (P1, P2) sont codées selon la technique du processeur codé, le voteur (P3) effectue, par logiciel et en sécurité, la comparaison des résultats caractéristiques codés (R1, R2) des deux microprocesseurs d'application (P1, P2) en utilisant la technique du processeur codé, et les données de sortie (DS) sont relues en sécurité pour être comparées aux données d'entrée (DE).

2. Système de sécurité selon la revendication 1, caractérisé en ce qu'un décalage temporel est introduit entre les deux microprocesseurs d'application (P1,P2).

3. Système de sécurité selon la revendication 1 ou 2, caractérisé en ce qu'il comporte un bus unique banalisé (B) par lequel transitent les informations entre les différents microprocesseurs (P1, P2, P3).

4. Système de sécurité selon l'une quelconque des revendications 1 à 3, caractérisé en ce que le voteur (P3) comporte un algorithme permettant d'effectuer, en plus de la comparaison des résultats (R1, R2) des deux microprocesseurs d'application (P1, P2), des filtrages et des contrôles de cohérence sur les différentes sorties.

5. Système de sécurité selon la revendication 4, caractérisé en ce que l'algorithme du voteur (P3) permet de réaliser une inhibition partielle des sorties en cas de désaccord sur certains résultats seulement.

6. Système de sécurité selon l'une quelconque des revendications 1 à 5, caractérisé en ce qu'il comprend plus de deux processeurs d'application (P1, P2), le voteur (P3) assurant une logique majoritaire de n processeurs parmi p.

7. Système de sécurité selon la revendication 6, caractérisé en ce que le logiciel du voteur est implanté sur l'un quelconque des processeurs d'application.

## Patentansprüche

1. Mikroprozessor-Sicherheitssystem, insbesondere verwendbar auf dem Gebiet des Bahntransports, um Betätigungseinrichtungen (ACT) in Abhängigkeit von Daten zu steuern, die von Sensoren (CP) geliefert werden, wenigstens zwei dieselbe Anwendung bearbeitende, parallelgeschaltete Mikroprozessoren (P1, P2) umfassend, deren Eingänge die Daten (DE) der Sensoren (CP) empfangen, und einen dritten Mikroprozessor (P3), Votant genannt, der die Resultate (R1, R2) der beiden Anwendungsmikroprozessoren (P1, P2) vergleicht und in der Folge einen dynamischen Controller (CD) steuert, der das Senden der Ausgangsdaten (DS) an die Betätigungseinrichtungen (ACT) genehmigt,
**dadurch gekennzeichnet,**
daß die Eingänge und Ausgänge der beiden Anwendungsmikroprozessoren (P1, P2) codiert werden nach der Technik des codierten Prozessors, der Votant (P3), mittels Software bzw. Programm und in Sicherheit bzw. geschützt, den Vergleich der codierten charakteristischen Resultate (R1, R2) der beiden Anwendungsmikroprozessoren (P1, P2) durchführt, indem er die Technik des codierten Prozessors benutzt, und die Ausgangsdaten (DS) geschützt bzw. in Sicherheit erneut gelesen werden, um mit den Eingangsdaten (DE) verglichen zu werden.

2. Sicherheitssystem nach Anspruch 1, dadurch gekennzeichnet, daß zwischen den beiden Anwendungsmikroprozessoren (P1, P2) eine Zeitverschiebung eingeführt wird.

3. Sicherheitssystem nach Anspruch 1 oder 2, dadurch gekennzeichnet, daß es einen einzigen, universellen Bus (B) umfaßt, in dem die Daten zwischen den verschiedenen Mikroprozessoren (P1, P2, P3) verkehren.

4. Sicherheitssystem nach einem der Ansprüche 1 bis 3, dadurch gekennzeichnet, daß der Votant (3) einen Algorithmus umfaßt, der ermöglicht, außer dem Vergleich der Resultate (R1, R2) der beiden Anwendungsmikroprozessoren (P1, P2) Filtrierungen und Kohörenzkontrollen an den verschiedenen Ausgängen durchzuführen.

5. Sicherheitssystem nach Anspruch 4, dadurch gekennzeichnet, daß der Algorithmus des Votanten (P3) ermöglicht, im Falle von Nichtübereinstimmung von nur einigen Resultaten eine partielle Sperrung der Ausgänge zu realisieren.

6. Sicherheitssystem nach einem der Ansprüche 1 bis 5, dadurch gekennzeichnet, daß es mehr als zwei Anwendungsmikroprozessoren (P1, P2) umfaßt, wobei der Votant (P3) eine Majoritätslogik von n aus p Prozessoren gewährleistet.

7. Sicherheitssystem nach Anspruch 6, dadurch gekennzeichnet, daß die Software bzw. das Programm des Votanten in einem beliebigen der Anwendungsprozessoren installiert ist.

## Claims

1. Microprocessor based safety system, applicable, in particular, to the field of rail transport, for monitoring and controlling actuators (ACT) as a function of the data supplied by sensors (CP), comprising at least two microprocessors (P1, P2) in parallel handling the same application, the inputs of which receive the data (DE) from the sensors (CP) and a third comparison microprocessor (P3) known as a voter, for comparing results (R1, R2) of the two application microprocessors (P1, P2) and operating accordingly a dynamic controller (CD) authorizing the transmission of the output data (DS) to the actuators (ACT), characterized in that the inputs and outputs of both application microprocessors (P1, P2) are encoded according to the encoded processor technique, in that the voter (P3) performs, using software and in safety, the comparison of the encoded characteristic results (R1, R2) of the two application microprocessors (P1, P2) using the encoded processor technique, and in that the output data (DS) is read back in safety for comparison with the input data (DE).

2. Safety system according to claim 1, characterized in that a time lag is introduced between the two application microprocessors (P1, P2).

3. Safety system according to claim 1 or 2, characterized in that it comprises a single, non-dedicated bus (B) via which the information transits between the different microprocessors (P1, P2, P3).

4. Safety system according to any one of claims 1 to 3, characterized in that the voter (P3) comprises an algorithm making it possible, in addition to comparing the results (R1, R2) of the two application microprocessors (P1, P2), to carry out filtering and consistency checks on the different outputs.

5. Safety system according to claim 4, characterized in that the algorithm of the voter (P3) makes it possible to achieve partial inhibition of the outputs in the event of discrepancies between certain results only.

6. Safety system according to any one of claims 1 to 5, characterized in that it comprises more than two application processors (P1, P2), the voter (P3) providing majority logic for n out of p processors.

7. Safety system according to claim 6, characterized in that the voter's software is installed in any one of the application processors.
